# EUROPEAN PATENT APPLICATION

(11) **EP 1 775 661 A1**
(43) Date of publication of application: **18.04.2007**
(21) Application number: 05109603.0
(22) Date of filing: 14.10.2005
(51) Int. Cl.: G06F 17/24, G06F 17/22

(54) **Displaying using graphics display language and native UI objects**

(71) Applicant: Research In Motion Limited, Waterloo, Ontario N2L 3W8 (CA)
(72) Inventor: Lacey, Jon-David, Waterloo Ontario N2L 3W8 (CA); Wallis, Kenneth, Oakville Ontario L6H 2K8 (CA); Hayman, John, Waterloo Ontario N2L 3W8 (CA); Doktorova, Laura, Waterloo Ontario N2L 3W8 (CA); Fomitchev, Mikhail, Waterloo Ontario N2L 3W8 (CA); Garrood, Stuart, Waterloo Ontario N2L 3W8 (CA); Hayman, Scott, Waterloo Ontario N2L 3W8 (CA)
(74) Representative: Rickard, David John

(57) **Abstract**

A set of instructions include instructions written in a graphics display language (e.g., SVG) and instructions written in a Web form creation language (e.g., XForms). Graphics are rendered on a display of a device in accordance with the instructions which accord to the graphics display language. Parameters are extracted from the instructions according to the Web form creation language and these parameters are utilized to create native user interface objects. The Web form creation language may be modified to include parameters which indicate the size and position of a user input area such that these parameters will also be used in creating the native user interface objects. The native user interface objects may be used to allow a user to input information via the user controls of the device. A graphic element of the graphic display element may be bound to a submit operation of the Web form creation language to allow submission of information which is input.

## Description

Extensible mark-up language (XML) 1.0 (Third Edition) is a World Wide Web Consortium (W3C) Recommendation of February 4, 2004 available at www.w3.org, the contents of which are incorporated herein by reference. XML wraps information in XML tags in order to impart structure to the information so that the information may be more easily used across different programs and different computers. Scalable Vector Graphics (SVG) version 1.1 is a W3C Recommendation of January 14, 2003 available at www.w3.org, the contents of which are also incorporated herein by reference. SVG is a language that describes (static and animated) two-dimensional graphics in XML. Because SVG permits fine grained control of graphics, SVG is becoming increasingly popular as a language for delivering Web content.

A drawback with SVG is that it is not adapted to support Web pages with user inputs. Thus, for example, it does not define a drop-down menu. While a programmer could create a Web page with a drop-down menu from the graphics primitives available in SVG, this would involve considerable programming. Further, even if a drop-down menu were created in SVG, SVG does not support the capture and submission of any information a user of the Web page may input using the menu. Since SVG is an open standard, the SVG language could be modified so as to support user inputs to Web pages, but this would require considerable effort.

This invention seeks to provide a more economical manner of providing SVG functionality and user inputs in a Web page. More generally, the invention has application to extending the functionality of a graphics language.

A set of instructions include instructions written in a graphics display language and instructions written in a Web form creation language. Graphics are rendered on a display of a device in accordance with the instructions which accord to the graphics display language. Parameters are extracted from the instructions according to the Web form creation language and these parameters are utilized to create native user interface objects. The Web form creation language may be modified to include parameters which indicate the size and position of a user input area such that these parameters will also be used in creating the native user interface objects. The native user interface objects may be used to allow a user to input information via the user controls of the device. A graphic element of the graphic display language may be bound to a submit operation of the Web form creation language to allow submission of information which is input. Another graphic element may be bound to a reset operation of the Web form creation language.

According to this invention, there is preferably provided a method for operating a device comprising: receiving a set of instructions; rendering graphics on a display of said device in accordance with graphics instructions of said set of instructions, said graphics instructions according to a graphics display language; extracting parameters from other instructions of said set of instructions, said other instructions including instructions according to a Web form creation language; and utilizing said parameters to create native user interface objects.

According to another aspect of the invention, there is preferably provided a device comprising: a display; at least one user input control; a memory holding a set of instructions, said set of instructions including graphics instructions for rendering graphics on said display, said graphics instructions according to a graphics display language, and other instructions including instructions according to a Web form creation language, said other instructions including parameters; a controller for operating in accordance with said set of instructions to (i) render graphics on said display, (ii) extract parameters from said other instructions of said set of instructions, and (iii) utilize said parameters to create native user interface objects.

Other features and advantages of the present invention will become apparent from the following description in conjunction with the drawings.

### BRIEF DESCRIPTION OF THE DRAWINGS

In the figures which illustrate an example embodiment of the invention,

FIG. 1 is a schematic view of a system in accordance with this invention,

FIG. 2 is a schematic view of the wireless communication network and handheld device of FIG. 1,

FIGS. 3A to 3D illustrate exemplary source code on the Web content server of FIG. 1, and

FIG. 4 illustrates an example screen display resulting from the source code of FIGS. 3A to 3C.

### DESCRIPTION OF PREFERRED EMBODIMENTS

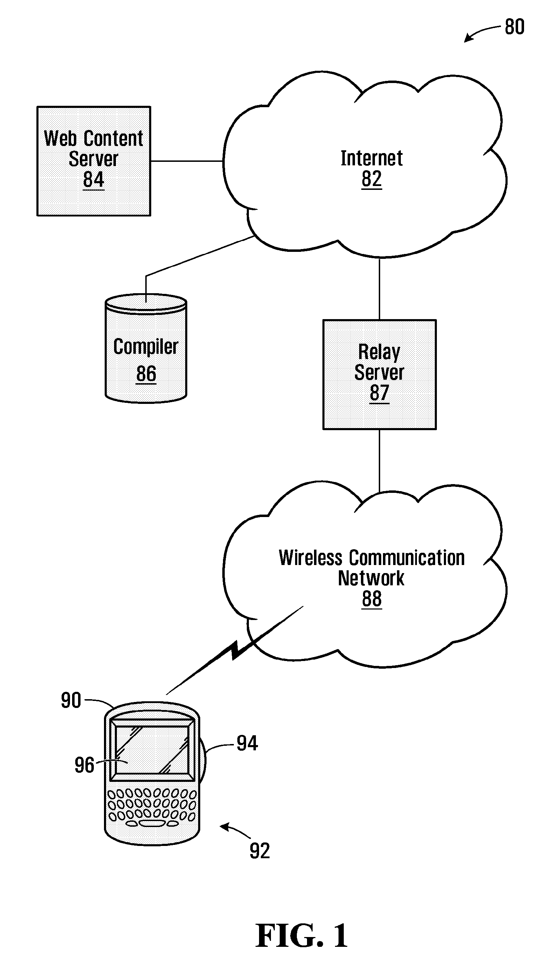

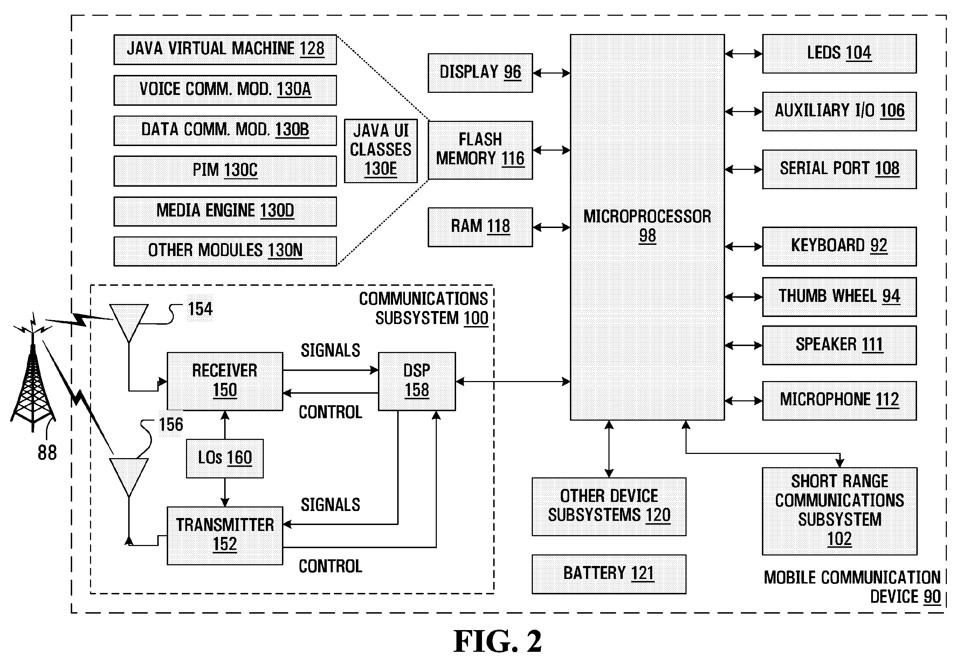

FIG. 1 illustrates a system 80 in accordance with this invention. The system includes the public Internet 82 to which is connected Web content server 84, compiler 86, and relay server 87. A wireless communication network 88 is connected to the relay server 87 and the wireless communication network 88 wirelessly connects to a handheld mobile communication device 90. Handheld mobile communication device 90 has a housing, one or more input controls - such as keyboard 92 and thumb wheel 94 -- and an output device, display 96, which is preferably a full graphic LCD. Other types of output devices may alternatively be utilized. Referencing FIG. 2 along with FIG. 1, a processing device, a microprocessor 98, is shown schematically as coupled between the keyboard 92, thumb wheel 94, and the display 96. The microprocessor 98 controls the operation of the display 96, as well as the overall operation of the mobile communication device 90, in response to actuation of keys on the keyboard 92 and/or the thumb wheel 94 by the user.

The housing may be elongated vertically, or may take on other sizes and shapes (including clamshell housing structures). The keyboard may include a mode selection key, or other hardware or software for switching between text entry and telephony entry.

In addition to the microprocessor 98, other parts of the mobile communication device 90 are shown schematically in FIG. 2. These include: a communications subsystem (or transceiver) 100; a short-range communications subsystem 102; the keyboard 92, thumb wheel 94 and the display 96, along with other input/output devices including a set of auxiliary I/O devices 106, a serial port 108, a speaker 111 and a microphone 112; as well as memory devices including a flash memory 116 and a Random Access Memory (RAM) 118; and various other device subsystems 120. The mobile communication device 90 is preferably a two-way RF communication device having voice and data communication capabilities. In addition, the mobile communication device 90 preferably has the capability to communicate with other computer systems via the Internet.

Operating system software executed by the microprocessor 98 is preferably stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile communication device may also be stored in the RAM 118.

The microprocessor 98, in addition to its operating system functions, enables operation of a JAVA virtual machine 128 and, through the JAVA virtual machine, software applications 130A-130N, all of which may be stored in flash memory 116 on the device 90. As will be understood by those skilled in the art, JAVA is a platform independent language and a JAVA virtual machine is created to allow JAVA programs to run on a specific device. The specific JAVA virtual machine that may be used with handheld 90 is that which is part of JAVA 2 Platform, Micro Edition (J2ME) available from Sun Microsystems, Inc. through www.sun.com. Details about JAVA are available from many sources including http://java.sun.com, the contents of which are incorporated by reference herein. A predetermined set of applications that control basic device operations, such as data and voice communications 130A and 130B, may be installed on the device 90 during manufacture. In addition, a personal information manager (PIM) application 130C may be installed during manufacture. The PIM is preferably capable of organizing and managing data items, such as e-mail, calendar events, voice mails, appointments, and task items. The PIM application is also preferably capable of sending and receiving data items via wireless network 88. Preferably, the PIM data items are seamlessly integrated, synchronized and updated via the wireless network 88 with the device user's corresponding data items stored or associated with a host computer system. Other factory installed applications may include a media engine 130D and JAVA user interface (UI) objects 130E, both of which are discussed further hereinafter.

Communication functions, including data and voice communications, are performed through the communications subsystem 100, and possibly through the short-range communications subsystem 102. The communications subsystem 100 includes a receiver 150, a transmitter 152, and one or more antennae 154 and 156. In addition, the communications subsystem 100 also includes a processing module, such as a digital signal processor (DSP) 158, and local oscillators (LOs) 160. The specific design and implementation of the communications subsystem 100 is dependent upon the communication network in which the mobile communication device 90 is intended to operate. For example, the communications subsystem 100 of the mobile communication device 90 may be designed to operate with the Mobitex™, DataTAC™ or General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile communication device 90.

Network access requirements vary depending upon the type of communication system. For example, in the Mobitex™ and DataTAC™ networks, mobile communication devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile communication device 90 may send and receive communication signals over the communication network 88. Signals received from the communication network 88 by the antenna 154 are routed to the receiver 150, which provides for signal amplification, frequency down conversion, filtering, channel selection, etc., and may also provide analog to digital conversion. Analog to digital conversion of the received signal allows the DSP 158 to perform more complex communication functions, such as demodulation and decoding. In a similar manner, signals to be transmitted to the network 88 are processed (e.g. modulated and encoded) by the DSP 158 and are then provided to the transmitter 152 for digital to analog conversion, frequency up conversion, filtering, amplification and transmission to the communication network 88 (or networks) via the antenna 156.

In addition to processing communication signals, the DSP 158 provides for control of the receiver 150 and the transmitter 152. For example, gains applied to communication signals in the receiver 150 and transmitter 152 may be adaptively controlled through automatic gain control algorithms implemented in the DSP 158.

In a data communication mode, a received signal, such as a text message or Web page download, is processed by the communications subsystem 100 and is input to the microprocessor 98. The received signal is then further processed by the microprocessor 98 for an output to the display 96, or alternatively to some other auxiliary I/O devices 106. A device user may also compose data items, such as e-mail messages, using one or more of the keyboard 92, the thumb wheel 94 and some other auxiliary I/O device 106, such as a touchpad, rocker switch, or some other type of input device. The composed data items may then be transmitted over the wireless communication network 88 via the communications subsystem 100.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the device 90. In addition, the display 96 may also be utilized in voice communication mode, for example to display the identity of a calling party, the duration of a voice call, or other voice call related information.

The short-range communications subsystem 102 enables communication between the mobile communication device 90 and other proximate systems or devices, which need not necessarily be similar devices. For example, the short-range communications subsystem may include an infrared device and associated circuits and components, or a Bluetooth™ communication module to provide for communication with similarly-enabled systems and devices.

The device 90 may have a battery 121 to power the active elements of the device.

The compiler 86 may comprise a processor operating under software control to receive and parse an input source code file into an output machine readable object file. As will be further explained hereinafter, the compiler is specifically adapted to parse source code which comprises a graphics display language, such as SVG, and a modified Web form creation language. The Web form creation language may be XForms: XForms version 1.0 is a World Wide Web Consortium (W3C) Recommendation of October 14, 2003 available at www.w3.org, the contents of which are incorporated herein by reference. Like SVG, XForms is an extension of XML.

In operational overview, a content provider may develop Web content using both a graphics display language and a Web form creation language. Statements in each language are separately identified in the source code. The Web form creation language may be modified to include a specification of the position and size of a user input defined by the Web form creation language. The source code may include a statement in the graphics display language that binds a graphical element to a submit operation of the Web form creation language. Another statement may bind a graphical element to a reset operation of the Web form creation language. The source code may be loaded to Web content server 84. Device 90 may request this content from Web content server 84 via wireless communications network 88, relay server 87, and Internet 82. When the content is returned, at relay 87 it is intercepted and re-directed to compiler 86. The compiler compiles the content source code into an object (binary) file and returns this to relay 87 which then passes it on to device 90 via wireless communications network 88. The microprocessor 98 of device 90 uses media engine 130D running on JAVA virtual machine 128 to render graphical elements found in the object file on display 96. Web form creation statements are parsed to extract parameters needed to create native UI objects from UI classes. These parameters are then used to create the native UI objects. The native UI objects then allow a user to enter and display data in the various specified UI areas. When a user selects a graphic bound to a submit operation, the user input data may be submitted a specified (local or remote) application, such as an application on the Web content server 84 (via network 88, relay 87, and Internet 82).

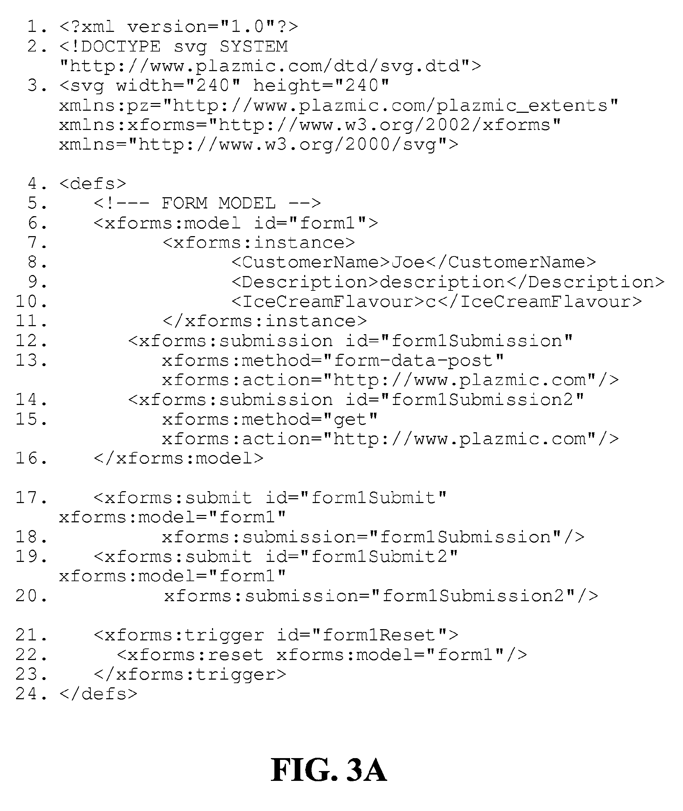

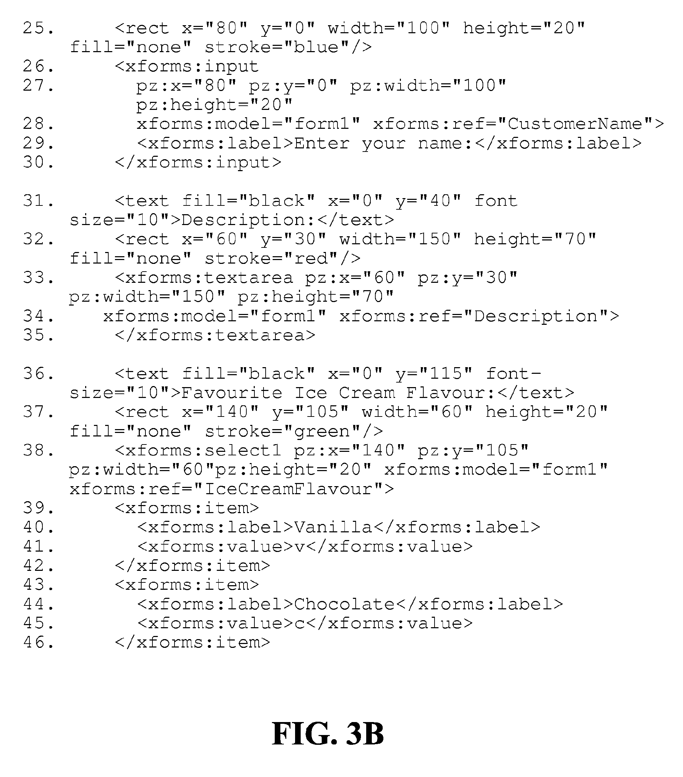

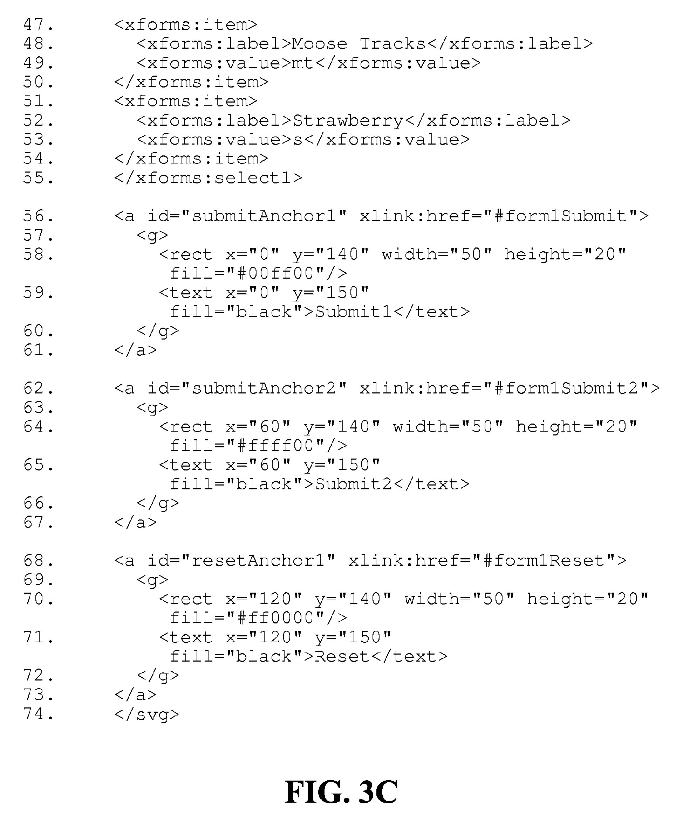

The operation may be more fully understood by way of the example source code of FIGS. 3A to 3C. This exemplary code contains both SVG and XForms statements, with XForms statements being prefixed by "XForms:" Such that the remaining statements, which are not so prefixed, can be assumed to be SVG statements. Turning to these FIGS., line 1 declares the code as XML code. Line 2 specifies the location of the document type declaration (DTD) file for the SVG statements. Line 3 sets the area of the display which may contain SVG graphics elements. Line 3 also defines the relevant namespaces. Specifically, a namespace is defined for the XForms extension "pz", a namespace is defined for XForms itself, and a namespace is defined for SVG. Lines 4 to 24 set out an XForms model definition which define a form model "form1". More specifically, lines 7 to 11 define the structure of the information to be collected from the user. Line 12 is an instruction on what to submit when a first submission"form1 Submission" - is triggered and line 13 stipulates the protocol to be used to transmit the instance data and the destination URL for the instance data. Lines 14 and 15 provide similar information when a second submission - "form1 Submission2" is triggered. Lines 17 to 20, also in XForms, initiate submission of instance data to which each submission is bound. Lines 21 to 23 define a user-triggered action in XForms, here a reset to delete any information in the form.

Line 25 is an SVG statement that establishes an empty rectangle with a blue border. The upper left corner of the rectangle is set at display position (80, 0) and the rectangle has a width of 100 (pixels) and a height of 20 (pixels). Lines 26 to 30 define a free-form XForms input for the "form1" form with the reference "CustomerName" and a descriptive label, namely, "Enter your name". In a standard XForms input statement, it is left to the Web Browser to establish a display position for the label and to create and position an associated text entry box. However, the standard form free-form input statement is modified by line 27 which contains four "pz" parameters. These pz parameters define a rectangle at a display position and it may be noted that this rectangle mirrors that defined by the SVG statement at line 25.

Line 31 uses an SVG statement to place the word "Description" on the display and line 32 uses a further SVG statement to place a rectangle beside this word. Lines 33 to 35 define an XForms user input text area for the "form1" form with the reference "Description". The standard text area statement in XForms is modified by the inclusion of the four "pz" parameters in line 33 and these parameters mirror those for the rectangle created in SVG at line 32.

Lines 36 and 37 establish the display of the words "Favourite Ice Cream Flavour:" and a rectangle beside this text. Lines 38 to 55 define an XForms selection menu to allow a user to choose one of four items. The value attribute of each choice establishes the value which is stored when an item is selected. Again, the "pz" parameters mirror the parameters for the rectangle created in SVG at line 37.

Lines 56 to 61 bind the "form1 Submit" XForms operation of lines 17 and 18 to an SVG graphic, namely a borderless coloured rectangle containing the word "Submit1". Similarly, lines 62 to 67 bind the "form1 Submit2" XForms operation of lines 19 and 20 to an SVG graphic, namely a borderless coloured rectangle containing the word "Submit2". Also similarly, lines 68 to 73 bind the "form1 Reset" XForms operation of lines 21 to 23 to an SVG graphic, namely a borderless coloured rectangle containing the word "Reset".

With reference to FIG. 1, the source code of FIGS. 3A to 3C could be stored on server 84. If this source code were requested by handheld device 90, it would first be compiled by compiler 86. With reference to FIG. 2, the compiled code would then be run by processor 98 through media engine 130D running atop JAVA virtual machine 128. When the media engine encountered SVG object code which establishes a graphic, the engine directly applies the code to render the graphic on the display 96. When the engine encountered modified XForms code to enable a user input, the engine extracts the parameters from the code and utilizes these parameters to establish a native UI object. For example, when the engine encountered the object code corresponding to the source code of lines 26 to 30, the engine would extract the four pz parameters, the "CustomerName" reference and the "Enter your name:" label and establish a native UI object with these parameters. The native UI object then uses these parameters to enable a user input. Thus, following the example, the native UI object controls the display of the words "Enter your name:" and a text box defined by the four pz parameters. The native UI object, being adapted for handheld 90, enables input of text to this box through keyboard 92, thumb wheel 94 and any auxiliary input devices 106 and stores the text which is entered under the reference "CustomerName". Native UI objects are similarly established to display user interfaces and allow input and storage of input values for the text box of source code lines 33 to 35 and the selection menu of source code lines 38 to 55. In this regard, it will be noted that by choosing "pz" parameters such that user input areas are either co-extensive with, or contained within, SVG graphics elements, SVG can be used to visually define these user input areas, such as the nature of their perimeter and their fill colour. SVG can also be used to define animation of these user input areas (e.g., areas that blink).

By binding an SVG graphic to an XForms submit operation, a user may effect a submit operation by selection of (e.g., clicking on) the SVG "submit" graphic. Similarly, by binding an SVG graphic to an XForms reset operation, a user may effect a reset by selection of the SVG "reset" graphic. Therefore, the engine does not need to establish a native UI object to provide this functionality.

As will be understood by those skilled in the art, the media engine creates a tree structure from the object code and then traverses the tree to perform the instructions established by the object code. The engine traverses the tree as required to refresh the display in response to active animations and user actions.

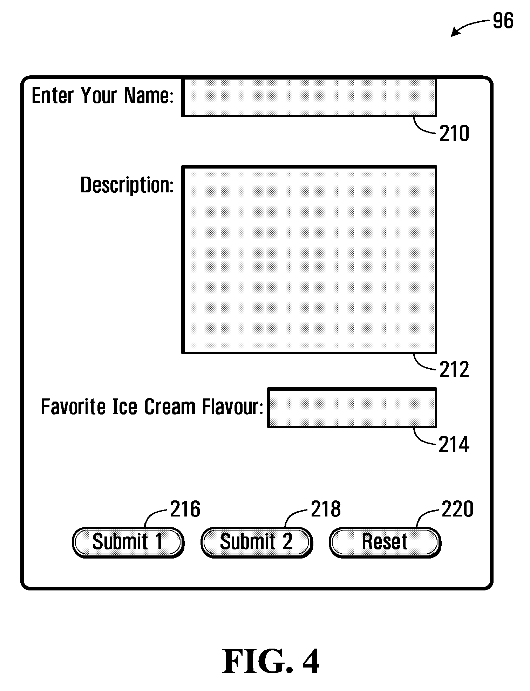

FIG. 4 illustrates the display 96 of the handheld after the media engine has traversed the tree established by the object code. Graphic elements 210, 212, and 214 are those defined by source code lines 25, 32, and 37, respectively. The "Submit1" graphic 216 is defined by source code lines 56 to 61, the "Submit2" graphic 218 by lines 62 to 67, and the "Reset" graphic 220 by lines 68 to 73.

Microprocessor 98 could be replaced by any suitable controller, such as a field programmable gate array (FPGA).

While the software applications 130A to 130N -- including the media engine 130D and the native UI objects instantiated from classes 130E -- are described as running on a JAVA virtual machine 128, with suitable adaptation, these software applications may run on another platform, such as Microsoft Windows^{tm}. Alternatively, the media engine could be part of the operating system of a device. While the graphics display language has been described as SVG, equally another graphics display language could be used. While the Web form creation language has been described as XForms, it may be possible to use another Web form creation language such as Hypertext Markup Language (HTML) forms, which is part of the HTML 4.01 W3C Recommendation of December 24, 1999.

The native UI objects of the handheld device 90 are objects that are developed to interact with the specific user interface controls (e.g., thumb wheel) of the handheld. These objects have been described as JAVA objects in the exemplary embodiment where the handheld runs a JAVA virtual machine. However, in a device operating on a different platform, these native UI objects will also be different so that they are adapted to run on the different platform.

It will be apparent that the teachings of this invention could be applied to a wireline device rather than a wireless device, as described in the exemplary embodiment. Further, the device could be, for example, a Personal Computer or laptop computer, rather than a handheld device. Dependent upon the capabilities of the device, it may be possible for the device to accept (and run) the source code itself from Web content server 84 rather than a compiled form of the source code. In such instance, compiler 86 would be unnecessary.

Other modifications will be apparent to those skilled in the art and, therefore, the invention is defined in the claims.

## Claims

1. A method for operating a device comprising the steps of:
receiving a set of instructions;
rendering graphics on a display of said device in accordance with graphics instructions of said set of instructions, said graphics instructions according to a graphics display language;
extracting parameters from other instructions of said set of instructions, said other instructions comprising instructions according to a Web form creation language; and
utilizing said parameters to create native user interface objects.

2. The method of claim 1 wherein said parameters comprise parameters providing position and size information for a user input area on said display.

3. The method of claim 1 or claim 2 wherein a graphic element of said graphics display language is bound to an operation of said Web form creation language.

4. The method of claim 3 wherein said operation is a submit operation or a reset operation.

5. The method of any one of claims 1 to claim 4 further comprising interpreting user input controls utilizing said native user interface objects.

6. The method of claim 5 further comprising enabling submission of user inputs utilizing said native user interface objects.

7. The method of claim 2 wherein said graphics instructions define a graphic at a first area of said display and wherein said parameters provide position and size information for a user input area on said display to define a second area of said display, said second area being either co-extensive with, or contained within, said first area.

8. The method of any one of claims 1 to claim 7 wherein said set of instructions comprise identifiers to identify portions of said set of instructions according to said Web form creation language.

9. The method of any one of claims 1 to claim 8 wherein said graphics display language and said Web form creation language are extensible mark-up languages (XML).

10. The method of any one of claims 1 to claim 8 wherein said graphics display language is Scalable Vector Graphics (SVG).

11. The method of claim 10 wherein said Web form creation language is XForms.

12. The method of claim 11 wherein said native user interface objects are JAVA objects.

13. The method of claim 11 wherein an SVG graphic element is bound to an XForms submit operation.

14. A device comprising:
a display;
at least one user input control;
a memory holding a set of instructions, said set of instructions comprising graphics instructions for rendering graphics on said display, said graphics instructions according to a graphics display language, and other instructions comprising instructions according to a Web form creation language, said other instructions comprising parameters;
a controller for operating in accordance with said set of instructions to (i) render graphics on said display, (ii) extract parameters from said other instructions of said set of instructions, and (iii) utilize said parameters to create native user interface objects.

15. The device of claim 14 wherein said native user interface objects enable user inputs with said at least one user input control.

16. The device of claim 14 or claim 15 wherein said controller comprises a JAVA virtual machine and wherein said native user interface objects are JAVA objects.

17. The device of any one of claims 14 to claim 16 wherein said graphics instructions comprise an instruction binding a graphical element to a submit operation of said other instructions.

18. The device of any one of claims 14 to claim 17 wherein said parameters comprise parameters setting position and size of a user input area.

19. The device of any one of claims 14 to claim 18 wherein said graphics display language is Scalable Vector Graphics and said Web form creation language is XForms.

20. The device of any one of claims 14 to claim 19 further comprising a transceiver for receiving said set of instructions and for transmitting data in response to a submit operation.

21. The device of any one of claims 14 to 20 wherein the device comprises a mobile communication device.

22. A wireless communication system comprising a plurality of mobile communication devices of claim 21.

23. A computer program product for rendering graphics on a display of a computing device, said computer program product comprising a computer readable medium holding a set of instructions executable by a processor of the computing device for implementing the method of any one of claims 1 to 13.

## Amended claims

### Amended claims in accordance with Rule 86(2) EPC.

**1.** A method for providing graphical functionality and user inputs in a webpage comprising the steps of:
receiving a set of instructions, said set of instructions comprising graphics instructions for rendering graphics on a display (96), said graphics instructions according to a graphics display language, and other instructions comprising instructions according to a Web form creation language, said other instructions comprising parameters;
rendering graphics on said display (96) of a device (90) in accordance with said graphics instructions of said set of instructions;
extracting said parameters from said other instructions of said set of instructions; and
utilizing said parameters to create native user interface objects.

**2.** The method of claim 1 wherein said parameters comprise parameters providing position and size information for a user input area (210, 212, 214) on said display (96).

**3.** The method of claim 1 or claim 2 wherein a graphic element (216, 218, 220) of said graphics display language is bound to an operation of said Web form creation language.

**4.** The method of claim 3 wherein said operation is a submit operation or a reset operation.

**5.** The method of any one of claims 1 to claim 4 further comprising interpreting user input controls utilizing said native user interface objects.

**6.** The method of claim 5 further comprising enabling submission of user inputs utilizing said native user interface objects.

**7.** The method of claim 2 wherein said graphics instructions define a graphic at a first area of said display and wherein said parameters provide position and size information for a user input area on said display to define a second area of said display, said second area being either co-extensive with, or contained within, said first area.

**8.** The method of any one of claims 1 to claim 7 wherein said set of instructions comprise identifiers to identify portions of said set of instructions according to said Web form creation language.

**9.** The method of any one of claims 1 to claim 8 wherein said graphics display language and said Web form creation language are extensible mark-up languages (XML).

**10.** The method of any one of claims 1 to claim 8 wherein said graphics display language is Scalable Vector Graphics (SVG).

**11.** The method of claim 10 wherein said Web form creation language is XForms.

**12.** The method of claim 11 wherein said native user interface objects are JAVA objects.

**13.** The method of claim 11 wherein an SVG graphic element is bound to an XForms submit operation.

**14.** A device (90) comprising:
a display (96);
at least one user input control (92, 94);
a memory (116) holding a set of instructions, said set of instructions comprising graphics instructions for rendering graphics on said display (96), said graphics instructions according to a graphics display language, and other instructions comprising instructions according to a Web form creation language, said other instructions comprising parameters;
a controller (98) for operating in accordance with said set of instructions to (i)
render graphics on said display (96), (ii) extract parameters from said other instructions of said set of instructions, and (iii) utilize said parameters to create native user interface objects.

**15.** The device (90) of claim 14 wherein said native user interface objects enable user inputs with said at least one user input control (92,94).

**16.** The device (90) of claim 14 or claim 15 wherein said controller comprises a JAVA virtual machine (128) and wherein said native user interface objects are JAVA objects.

**17.** The device (90) of any one of claims 14 to claim 16 wherein said graphics instructions comprise an instruction binding a graphical element to a submit operation of said other instructions.

**18.** The device (90) of any one of claims 14 to claim 17 wherein said parameters comprise parameters setting position and size of a user input area (210, 212, 214).

**19.** The device (90) of any one of claims 14 to claim 18 wherein said graphics display language is Scalable Vector Graphics and said Web form creation language is XForms.

**20.** The device (90) of any one of claims 14 to claim 19 further comprising a transceiver (100) for receiving said set of instructions and for transmitting data in response to a submit operation.

**21.** The device (90) of any one of claims 14 to 20 wherein the device comprises a mobile communication device.

**22.** A wireless communication system comprising a plurality of mobile communication devices of claim 21.

**23.** A computer program product for rendering graphics on a display (96) of a computing device (90), said computer program product comprising a computer readable medium holding a set of instructions executable by a processor (98) of the computing device for implementing the method of any one of claims 1 to 13.
